# FASCICULE DE BREVET EUROPEEN

(11) **EP 1 913 321 B1**
(45) Date de publication et mention de la délivrance du brevet: **02.12.2009**
(21) Numéro de dépôt: 06794518.8
(22) Date de dépôt: 02.08.2006
(51) Int. Cl.: F27B 7/36, C04B 7/43, F23D 14/32

(54) **PROCEDE DE CALCINATION D'UN MATERIAU A FAIBLE EMISSION DE NOX**
VERFAHREN ZUR KALZINIERUNG EINES MATERIALS MIT GERINGEN NOx-EMISSIONEN
METHOD FOR CALCINATION OF A MATERIAL WITH LOW NOX EMISSIONS

(30) Priorité: 03.08.2005 FR 0552422
(43) Date de publication de la demande: 23.04.2008
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: DUPERRAY, Pascal, F-78180 Montigny Le Bretonneux (FR); HAMMEL, Maguelonne, F-78180 Montigny Le Bretonneux (FR); PENFORNIS, Erwin, F-92300 Levallois Perret (FR); PAUBEL, Xavier, F-76100 Rouen (FR)
(74) Mandataire: De Vleeschauwer, Natalie Y.L.D.
(86) Numéro de dépôt international: PCT/FR2006/050777
(87) Numéro de publication internationale: WO 2007/015029

(56) Documents cités:
- US-A- 3 397 256
- US-A- 3 519 254
- US-A- 4 523 529
- US-B1- 6 318 278
- US-B1- 6 375 456

## Description

La présente invention concerne un procédé d'amélioration de la combustion dans un four industriel à haute température ainsi qu'un dispositif d'amélioration de la combustion dans un tel four.

Il est connu que les procédés industriels à haute température utilisant pour l'apport de l'énergie des combustibles à teneur non négligeable en azote, tels que le charbon ou le coke de pétrole, génèrent des émissions importantes d'oxydes d'azotes (NOₓ). NOₓ est le terme collectif pour désigner tous les oxydes d'azotes, notamment le monoxyde d'azote (NO) et le dioxyde d'azote (NO₂). On distingue principalement deux types de NOₓ selon le mécanisme de leur formation : les NOₓ du combustible et les NOₓ thermiques. Les NOₓ du combustible résultent de l'oxydation des composées azotés du combustible. Les NOx thermiques, qui correspondent à une oxydation de l'azote atmosphérique par l'oxygène de combustion, dépendent principalement de 3 variables :
- la concentration d'oxygène dans les zones à haute température de la flamme (>1200°C),
- le temps de résidence de l'oxygène dans ces zones, et surtout
- la température dans ces zones.

Les NOₓ sont toxiques pour les plantes et notamment le dioxyde d'azote peut déclencher des difficultés respiratoires chez l'homme. Les NOₓ sont également l'un des précurseurs principaux dans la formation de l'ozone. De plus, les émissions de NOₓ participent à l'acidification et l'eutrophisation du sol.

Le problème des émissions des NOₓ se pose dans toutes les industries qui utilisent des procédés à haute température. L'une des industries particulièrement concernées est celle de la fabrication de ciment, où les procédés de fabrication sont soumis à des normes de plus en plus strictes concernant les émissions d'oxydes d'azote (NOₓ). Dans ces procédés cimentiers, la formation des NOx du combustible est liée à l'utilisation de combustibles à teneur non négligeable en azote, pour lesquels l'oxydation des composés azotés du combustible conduit à la formation de NO. Ce mécanisme a lieu à la fois au niveau du brûleur du four rotatif, lors de l'ignition du combustible, et dans le précalcinateur lorsqu'il existe. Les NOx thermiques, pour leur part, sont inévitables dans la zone de combustion du four rotatif, à cause du besoin d'une température suffisamment haute pour la réaction dite de clinkerisation du cru (1450°C), accélérant ainsi l'oxydation de l'azote atmosphérique.

Les techniques actuelles pour réduire les émissions de NOₓ peuvent être classées en deux catégories : les techniques primaires limitant la formation des NOₓ lors de la combustion et les techniques secondaires, basées sur un traitement des fumées pour éliminer les NOₓ créés en amont.

Pour permettre de réduire efficacement la formation des NOₓ dans les procédés cimentiers, toute technique primaire se doit de limiter à la fois la formation des NOₓ du combustible et les NOₓ thermiques. Parmi les principales mesures primaires, on recense :
- les brûleurs bas NOₓ, qui optimisent le mélange du combustible et des différentes injections de comburant afin de limiter principalement la formation des NOₓ thermiques par un effet d'étagement local de la combustion. Cette méthode trouve ses limites dans les instabilités de flamme qui sont générées lorsque l'air primaire est réduit en deçà de limites acceptables (∼10% de l'air stoechiométrique nécessaire). Les réductions disponibles sont ainsi de l'ordre de 30%.
- le refroidissement de la flamme par injection d'eau, qui a pour objectif de réduire les NOₓ thermiques en abaissant les pics de température dans la flamme. On peut ainsi atteindre jusqu'à 50% de réduction des NOₓ, mais ce procédé réduit significativement le rendement de combustion et s'avère causer des problèmes dans le fonctionnement du four.
- l'étagement de la combustion entre le four rotatif et le précalcinateur lorsqu'il existe, permet d'effectuer une réduction des NOₓ à haute température à la sortie du four rotatif et de compléter ensuite la combustion en aval dans le précalcinateur et l'unité de préchauffage. Des niveaux de réduction des NOₓ jusqu'à 50% sont revendiqués, mais ces systèmes sont lourds en coût d'investissement en raison des importantes modifications de l'installation qu'ils nécessitent. De nombreux problèmes de formation excessive de CO sont également mentionnés, qui ne permettent pas d'obtenir des taux de réduction des NOₓ réguliers.

Aujourd'hui aucune de ces techniques primaires n'est capable de réduire suffisamment les émissions de NOₓ, ce qui pousse les cimentiers à utiliser des méthodes secondaires coûteuses afin de respecter les normes en vigueur.

Les mesures secondaires utilisées sont classiques : il s'agit des procédés catalytiques ou non de réduction des NOₓ (SNCR = réduction sélective non catalytique, SCR = réduction sélective catalytique) basés sur l'injection d'ammoniac ou d'urée dans les fumées pour réduire le NO en N₂. De plus larges réductions de NOₓ sont alors possibles, mais pour des coûts d'investissement et de fonctionnement significativement plus élevés. En outre, ces techniques requièrent des plages de température bien précises et tout écart peut alors entraîner l'émission d'ammoniac n'ayant pas réagi dans les fumées, qui peut ensuite s'oxyder en NOₓ.

Outre la réduction des émissions des NOₓ un autre souci majeur des fabricants de ciments est l'obtention d'un rendement et d'une qualité satisfaisants. Des techniques mettant en oeuvre l'utilisation d'oxygène ou de gaz enrichis en oxygène ont été développées. Elles sont principalement conçues pour permettre une augmentation de la production ou de la qualité du produit en permettant une augmentation de la température dans la zone de clinkérisation. De ce fait, elles entraînent généralement une augmentation ou au mieux un maintien des niveaux des émissions de NOₓ par rapport à un fonctionnement sans oxygène ajouté.

Le document US 3,397,256 décrit l'utilisation d'un brûleur oxy-combustible placé entre la charge et le brûleur principal, avec l'effet d'une augmentation significative de température dans cette zone, et donc inévitablement de la quantité de NOₓ émis.

Le document US 5,572,938 divulgue l'injection d'oxygène dans l'air primaire, au travers du brûleur principal, dans le but d'améliorer le transfert thermique à la charge et la production. Aucune précision n'est donnée quant à une méthode d'injection limitant la formation des NOₓ du combustible. Une injection d'oxygène est également proposée exclusivement dans la partie basse du four rotatif, le long de la charge, afin d'étager la combustion. Ce positionnement spécifique permet de conserver des conditions oxydantes au-dessus de la charge et de lui transférer davantage d'énergie, mais ne permet pas un mélange adéquat avec l'ensemble des imbrûlés.

Le document US 5,580,237 décrit un injecteur permettant d'optimiser l'injection d'oxygène au brûleur, dans un but de stabilisation de la flamme. La quantité de NOₓ émis est maintenue ou légèrement diminuée.

Le brevet US 6,309,210 de la société demanderesse enseigne l'enrichissement en oxygène des airs primaires, secondaires et tertiaires afin d'améliorer la capacité de refroidissement du clinker et d'améliorer la combustion en général. La dilution générale de l'oxygène dans l'ensemble des gaz de combustion va à l'encontre des principes de réduction de la quantité de NOₓ émis. D'autres procédés de calcination sont décrits dans US 6 375 456 B et dans US 6 318 278 B.

Un but de la présente invention est donc de proposer une technique novatrice d'amélioration de la combustion dans un four industriel à haute température, tel qu'un four rotatif, qui permet à la fois de réduire les émissions de NOₓ et d'obtenir un rendement et une qualité de produit satisfaisants.

A cette fin, l'invention concerne un procédé de calcination d'un matériau, dans lequel ledit matériau est chauffé au contact d'une source de chaleur essentiellement créée par une flamme engendrée par au moins un flux (a) de combustible et d'air primaire, et un flux (b) d'air secondaire, la flamme comprenant une première (I) zone de combustion de température inférieure à 1500°C et une seconde (II) zone de combustion de température supérieure à 1500°C, et dans lequel
- on injecte au moins un flux (c) d'au moins un gaz inerte à l'intérieur de la flamme au niveau du début de la seconde (II) zone de combustion, et/ou
- on injecte au moins un flux (d) d'oxygène ou d'un gaz enrichi en oxygène au niveau de la seconde (II) zone de combustion.

La division de la flamme en une première et une seconde zone de combustion est faite en fonction du type de NOₓ qui est formé dans cette zone lors d'un procédé de combustion traditionnel. Ainsi la première zone de combustion est la zone où se déclenche la combustion et où le mécanisme prédominant de formation de NOₓ est celui des NOₓ du combustible. La seconde zone de combustion est la zone où la flamme atteint ses pics de température au contact de l'air secondaire et où la formation des NOₓ thermiques prédomine. La limite entre la première et la seconde zone de combustion est fixée à l'endroit où la température de la flamme franchit 1500°C, température au-delà de laquelle le taux de formation des NOₓ thermiques augmente significativement.

L'injection d'au moins un flux d'au moins un gaz inerte au niveau du début de la seconde zone de combustion permet, tout en conservant une température aussi élevée que possible au niveau de la première zone de combustion, d'absorber de l'énergie thermique libérée lors de la combustion du combustible avec l'air secondaire dans la seconde zone de combustion. Ainsi, la température de la flamme baisse au niveau de la seconde zone de combustion. De préférence, on utilise au moins deux flux de gaz inerte(s) placés symétriquement. De cette manière on obtient une meilleure homogénéisation de la température au sein de la flamme. Le ou les gaz inertes qui sont utilisés pour l'injection au niveau du début de la seconde zone de combustion sont avantageusement choisis dans le groupe consistant en l'azote, les fumées de recirculation, le dioxyde de carbone et la vapeur d'eau. L'azote est un choix privilégié, notamment dans le cas où sa production sur le site d'exploitation du procédé à haute température peut être réalisée conjointement avec la production d'oxygène nécessaire pour d'autres applications, telle que l'injection au niveau de la seconde zone de combustion selon l'invention. Avantageusement, le ou les flux de gaz inerte(s) est (ou sont) injecté(s) à une vitesse supérieure à celle de l'air secondaire afin d'avoir une pénétration suffisante jusqu'à la seconde zone de combustion. Cependant cette vitesse restera inférieure à la vitesse du son telle que mesurée dans le four, et de préférence dans une plage de vitesse entre Mach 0,2 et Mach 1 (Mach 1 correspondant à la vitesse du son) afin d'assurer un mélange immédiat du ou des gaz inerte(s) avec la flamme dès leur entrée dans la seconde zone de combustion. Pour chaque application l'homme du métier sait définir le nombre de flux permettant d'obtenir un compromis satisfaisant entre la qualité d'homogénéisation du gaz inerte avec les gaz de la seconde zone de combustion et une pour un débit global donné de gaz inerte. En ce qui concerne la qualité d'homogénéisation du gaz inerte avec les gaz de la seconde zone de combustion, l'homme du métier sait qu'elle augmente en augmentant le nombre de flux de gaz inerte. Quant à la pénétration suffisante jusqu'à la seconde zone de combustion l'homme du métier sait qu'elle peut être améliorée en augmentant l'impulsion de ces flux d'inertes, c'est à dire en diminuant le nombre de flux. On comprend ici par impulsion le produit du débit de gaz par sa vitesse.

Ce mélange, et donc une homogénéisation rapide de la composition et de la température de la flamme, peut être facilité par une injection tourbillonnante, caractérisée par une composante tangentielle impulsée au gaz lors de son injection.

En ce qui concerne le ou les flux d'oxygène ou de gaz enrichi en oxygène, on les injecte, de préférence, de manière à ce qu'ils tangentent la flamme (F) au niveau de la seconde zone de combustion, ce qui permet d'amplifier les recirculations à l'intérieur de la flamme (F) et d'obtenir le mélange de l'oxygène ou du gaz enrichi en oxygène et de la flamme à l'extrémité de celle-ci. De plus, en fournissant de l'oxygène de cette manière, l'ensemble de la combustion se réalise dans des conditions riches en combustible, réduisant la température de flamme ainsi que le temps de résidence et la concentration en oxygène dans la flamme. Afin d'homogénéiser l'apport en oxygène, on utilise de préférence au moins deux flux d'oxygène ou de gaz enrichi en oxygène placés symétriquement par rapport à l'axe de la flamme. Lorsque l'injection d'au moins un flux d'oxygène ou de gaz enrichi en oxygène au niveau de la seconde zone de combustion est pratiquée selon l'invention, on réduit avantageusement le débit d'air secondaire. Une partie de l'oxygène qui est normalement apporté par l'air secondaire, est ainsi substitué par de l'oxygène fourni par cette injection. De cette façon, on évite des conditions de combustion trop riches en oxygène, qui conduiraient à une augmentation de la température de la flamme et qui iraient à l'encontre de la réduction de la formation des NOₓ thermiques. De préférence, le (ou les) flux d'oxygène ou de gaz enrichi en oxygène est (ou sont) injecté(s) à une vitesse supérieure à Mach 0,5, de préférence supérieure à Mach 1. De cette façon, on obtient un ou des jet(s) d'oxygène ou de gaz enrichi en oxygène dit(s) « cohérent(s) », qui ne se dégrade(nt) pas durant la première partie du trajet dans le four et ne se mélange(nt) qu'avec les imbrûlés en fin de flamme, dans une zone où la température a déjà décru et où le risque de formation de NOₓ thermiques est donc réduit. De plus, ce (ou ces) jet(s) de gaz amplifie(nt) les recirculations au sein de la flamme ainsi que l'apport de produits de combustion vers l'intérieur de la flamme, permettant ainsi d'homogénéiser la température et de réduire les pics de température de la flamme.

Dans un mode de réalisation préféré, les deux modes d'injection tels que décrits précédemment sont combinés. De préférence, les injections sont effectuées simultanément.

Avantageusement, l'injection de gaz inerte(s) et/ou l'injection d'oxygène ou de gaz enrichi en oxygène peuvent être combinées avec un faible enrichissement en oxygène de l'air de transport et de pulvérisation du combustible, afin d'augmenter la température dans la zone d'inflammation du combustible et ainsi de réduire la formation des NOx du combustible, comme ceci est décrit dans la demande de brevet WO 2004/065849.

Le procédé de calcination selon l'invention est particulièrement avantageux lorsque des combustibles solides à forte teneur en azote, tels que le charbon et le coke de pétrole, sont utilisés. Lors de l'utilisation d'un combustible solide, celui-ci est pulvérisé par un gaz vecteur, tel que l'air, le plus généralement de l'air.

Le procédé selon l'invention peut être utilisé dans tout procédé industriel, tels que la fabrication de la chaux, du verre, et notamment du ciment. L'utilisation du procédé selon l'invention pour la calcination d'un matériau à base de minerais est particulièrement avantageuse.

Toutefois, le procédé selon l'invention peut également être utilisé lorsque tout ou partie des combustibles employés pour le procédé industriel de combustion à haute température sont des combustibles gazeux à faible teneur en azote. Notamment, dans le cas d'une utilisation prédominante de combustible gazeux à faible teneur en azote pour un procédé cimentier, le procédé selon l'invention peut avantageusement être combiné avec le système de combustion oscillante, qui permet l'augmentation de l'inhibition de la formation des NOₓ thermiques. Ce système est breveté par la demanderesse (US 5,302,111).

Le procédé selon l'invention peut être mis en oeuvre à l'aide d'un dispositif de combustion, qui comprend :
- un brûleur susceptible d'être alimenté en comburant et combustible,
- un moyen d'injection d'air assurant la délivrance d'un flux d'air autour du brûleur,
- au moins une lance d'injection de gaz inerte, ayant une première extrémité d'arrivée de gaz et une seconde extrémité de sortie de gaz, la seconde extrémité de sortie de gaz étant plus proche de l'axe longitudinal du brûleur que la première extrémité d'arrivée de gaz, et /ou
- au moins une lance d'injection d'oxygène ou de gaz enrichi en oxygène, ayant une première extrémité d'arrivée de gaz et une seconde extrémité de sortie de gaz, la première extrémité d'arrivée de gaz étant plus proche de l'axe longitudinal du brûleur que la seconde extrémité de sortie de gaz.

Afin de permettre une vitesse d'injection supérieure à Mach 0,5 et préférablement supérieure à Mach 1, l'extrémité de sortie de la lance d'oxygène ou de gaz enrichi en oxygène est préférablement équipée d'une tuyère dite De Laval, avec successivement une section convergente puis divergente. La pression d'alimentation du gaz est ajustée en fonction du diamètre de l'injecteur et de la vitesse recherchée.

De préférence, la lance de gaz inerte est inclinée d'un angle α compris entre 0° et 45°, qui est formé par les axes longitudinaux de la lance et du brûleur, et la lance d'oxygène ou de gaz enrichi en oxygène est inclinée d'un angle β compris entre 0° et 20°, qui est formé par les axes longitudinaux de la lance et du brûleur. Dans un mode de réalisation préféré, le dispositif selon l'invention comprend au moins deux lances de gaz inerte agencées concentriquement autour du brûleur et/ou au moins deux lances d'oxygène ou de gaz enrichi en oxygène agencées concentriquement autour du brûleur. De cette manière, une meilleure homogénéisation de l'apport du ou des gaz et ainsi de la température de la flamme est obtenue. L'angle a entre les axes longitudinaux du brûleur et de la lance de gaz inerte(s) est choisi de façon à permettre l'injection du gaz inerte à l'intérieur de la flamme. Avantageusement, il est compris entre 0° et 45°, de préférence entre 0° et 20°, cette valeur variant cependant avec la géométrie du procédé considéré et de la longueur caractéristique de flamme, définie en première approximation comme la longueur de la flamme visible.

L'angle β entre les axes longitudinaux du brûleur et de la lance d'oxygène ou de gaz enrichi en oxygène est choisi tel que le flux d'oxygène ou de gaz enrichi en oxygène fourni par cette lance tangente la flamme. Il est avantageusement compris entre 0 ° et 20 °, de préférence entre 0° et 10°, cette valeur variant cependant avec la géométrie du procédé considéré et de la longueur caractéristique de flamme. De cette inclinaison de la ou des lances d'oxygène ou de gaz enrichi en oxygène vers l'extérieur de la flamme résulte un élargissement de la flamme, agrandissant ainsi le volume de combustion et réduisant davantage les pics de température à l'intérieur de la flamme.

Dans un mode de réalisation, le dispositif selon l'invention comprend au niveau de la sortie du brûleur un appendice en forme de douille ayant les bords intérieurs et extérieurs évasés. Les bords intérieurs sont évasés d'un angle γ par rapport à l'axe longitudinal du brûleur et les bords extérieurs sont évasés d'un angle δ par rapport au même axe. Avantageusement, l'angle γ est compris entre 0 ° et 45 °, de préférence entre 0° et 25°, et l'angle δ entre 0° et 45°, de préférence entre 0° et 30°. L'évasement des bords intérieurs de cet appendice augmente les recirculations des gaz dans la flamme au niveau de la sortie du brûleur. On obtient ainsi une combustion plus rapide et complète. En raison de ses bords extérieurs évasés, l'appendice sert de déflecteur qui peut guider de l'air secondaire sur une trajectoire telle qu'il se mélange avec la flamme qu'au niveau de la seconde zone de combustion. Ceci permet d'optimiser l'étagement de l'oxygène. L'appendice est constitué d'un matériau résistant à des températures élevées, c'est-à-dire au-delà de 1500 °C. Il s'agit de préférence d'une céramique ou d'un matériau réfractaire.

Le dispositif de combustion selon l'invention peut être utilisé dans tout type de four industriel à haute température. Toutefois, il est particulièrement adapté aux fours rotatifs tels qu'utilisés dans l'industrie cimentière.

D'autres particularités et avantages de l'invention apparaîtront à la lecture de la description ci-après, faite en références aux figures dans lesquelles :
- la figure 1 représente schématiquement une coupe transversale d'un mode de réalisation d'un dispositif de combustion selon l'invention,
- la figure 1A représente schématiquement un détail de la figure 1,
- la figure 2 représente schématiquement une coupe transversale d'un autre mode de réalisation d'un dispositif de combustion selon l'invention,
- la figure 2A représente schématiquement un détail de la figure 2,
- la figure 3 représente schématiquement une coupe transversale d'un détail optionnel d'un dispositif de combustion selon l'invention.

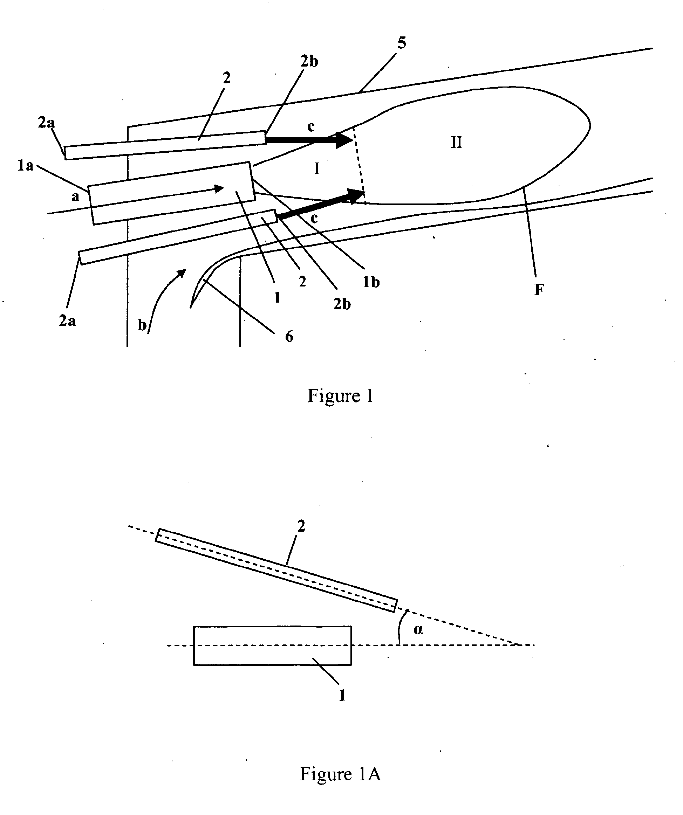

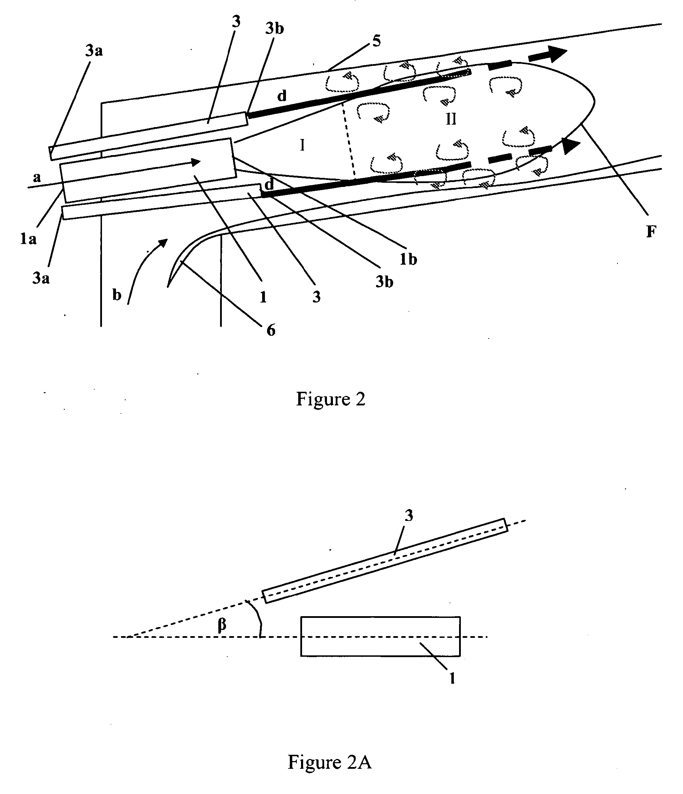

Les figures 1 et 2 représentent schématiquement l'agencement de deux lances de gaz inerte(s) 2 et d'oxygène ou de gaz enrichi en oxygène 3 respectivement autour du brûleur 1 au niveau de la sortie d'un four 5 rotatif de calcination. Le four 5 est légèrement incliné de façon à permettre l'évacuation du clinker 6. Le brûleur 1 est alimenté avec un flux a de combustible et d'air primaire. Après allumage de ce flux a au niveau de la sortie du brûleur 1, on obtient la flamme F.

Sur les figures 1, 2 et 3, la flamme F est découpée en deux zones I et II de combustion. La limite de ces deux zones I et II est constituée par l'endroit où la flamme F franchit une température de 1500°C : dans la zone I la température est inférieure à 1500°C et dans la zone II elle est supérieure à 1500°C.

Le four rotatif 5 est également équipé d'un moyen d'injection d'air (non représenté sur les figures) assurant la délivrance d'un flux b d'air secondaire autour du brûleur. Ce flux b apporte la majeure partie de l'air de combustion et permet ainsi de compléter la combustion du combustible entamée par l'air primaire.

La figure 1 représente un dispositif de combustion selon l'invention comprenant deux lances 2 de gaz inerte, agencées concentriquement autour du brûleur 1. Les lances 2 de gaz inerte sont diamétralement opposées. Les lances 2 ont une première extrémité 2a d'arrivée de gaz et une seconde extrémité 2b de sortie de gaz, la seconde extrémité 2b de sortie de gaz étant toutefois plus proche de l'axe longitudinal du brûleur 1 que la première extrémité 2a d'arrivée de gaz. Avantageusement, la lance 2 de gaz inerte est inclinée d'un angle α compris entre 0° et 45°, de préférence entre 0° et 20°, qui est formé par les axes longitudinaux de la lance et du brûleur (Figure 1A). La valeur de l'angle α varie cependant avec la géométrie du procédé considéré et de la longueur caractéristique de la flamme.

La figure 2 représente un dispositif de combustion selon l'invention comprenant deux lances 3 d'oxygène ou de gaz enrichi en oxygène, agencées concentriquement autour du brûleur 1. Les lances 3 de gaz inerte sont diamétralement opposées. Les lances 3 ont une première extrémité 3a d'arrivée de gaz et une seconde extrémité 3b de sortie de gaz, la première extrémité 3a d'arrivée de gaz étant plus proche de l'axe longitudinal du brûleur 1 que la seconde extrémité 3b de sortie de gaz. Avantageusement, la lance 3 d'oxygène ou de gaz enrichi en oxygène est inclinée d'un angle β compris entre 0° et 20°, de préférence entre 0° et 10° qui est formé par les axes longitudinaux de la lance et du brûleur (Figure 2A). La valeur de l'angle β varie cependant avec la géométrie du procédé considéré et de la longueur caractéristique de la flamme.

Dans un mode de réalisation avantageux, non représenté, les deux modes de réalisation représentés sur les figures 1 et 2 sont combinés pour former un seul dispositif d'amélioration de la combustion selon l'invention.

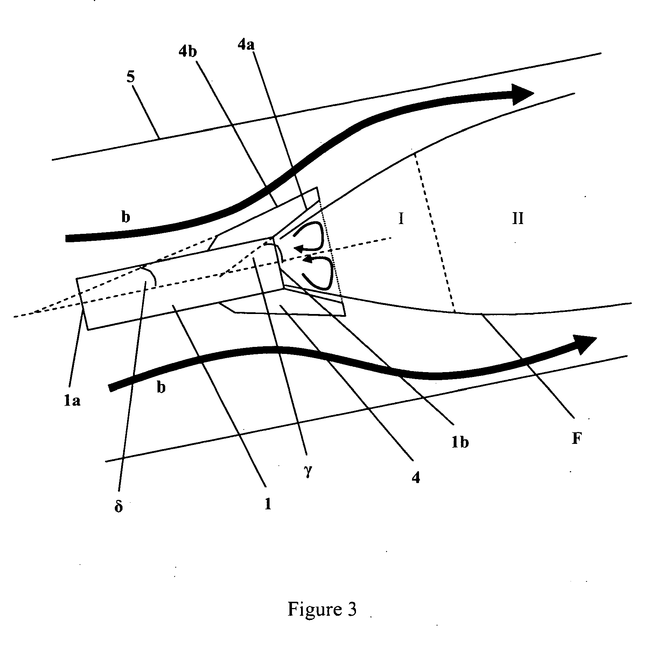

La figure 3 représente un appendice 4, qui est posé sur le brûleur 1 au niveau de sa sortie. Cet appendice 4 a la forme d'une douille avec les bords intérieurs 4a et extérieurs 4b évasés. Les bords 4a intérieurs sont évasés d'un angle γ par rapport à l'axe longitudinal du brûleur et les bords 4b extérieurs sont évasés d'un angle δ par rapport au même axe, l'angle γ étant plus grand que l'angle δ. Avantageusement, l'angle γ est comprise entre 0° et 45°, de préférence entre 0° et 25°, et l'angle δ entre 0° et 45°, de préférence entre 0° et 30°.

## Revendications

1. Procédé de calcination d'un matériau, dans lequel ledit matériau est chauffé au contact d'une source de chaleur essentiellement créée par une flamme engendrée par au moins un flux (a) de combustible et d'air primaire, et un flux (b) d'air secondaire, la flamme comprenant une première (I) zone de combustion de température inférieure à 1500°C et une seconde (II) zone de combustion de température supérieure à 1500°C, et dans lequel
- on injecte au moins un flux (c) d'au moins un gaz inerte à l'intérieur de la flamme au niveau du début de la seconde (II) zone de combustion, et/ou
- on injecte au moins un flux (d) d'oxygène ou d'un gaz enrichi en oxygène au niveau de la seconde (II) zone de combustion.

2. Procédé selon la revendication 1, **caractérisé en ce qu'**on injecte le (ou les flux) (d) de manière à ce qu'il(s) tangente(nt) la flamme (F) au niveau de sa seconde (II) zone de combustion.

3. Procédé selon la revendication 1, **caractérisé en ce que** le gaz inerte est choisi dans le groupe consistant en l'azote, les fumées de recirculation, le dioxyde de carbone et la vapeur d'eau.

4. Procédé selon l'une quelconque des revendications 1 ou 2, **caractérisé en ce que** le gaz inerte est de l'azote.

5. Procédé selon l'une quelconque des revendications 1 à 3, **caractérisé en ce que** le (ou les) flux (c) est (ou sont) injecté(s) à une vitesse supérieure à celle de l'air secondaire.

6. Procédé selon l'une quelconque des revendications 1 à 4, **caractérisé en ce que** le (ou les) flux (c) est (ou sont) injecté(s) à une vitesse inférieure à la vitesse du son telle que mesurée dans le four.

7. Procédé selon l'une quelconque des revendications 1 à 5, **caractérisé en ce que** l'injection du (ou des) flux (c) est (ou sont) une (ou des) injection(s) tourbillonante(s), possédant une composante tangentielle.

8. Procédé selon l'une quelconque des revendications 1 à 7, **caractérisé en ce que** le (ou les) flux (d) est (ou sont) injecté(s) à une vitesse supérieure à Mach 0,5, de préférence supérieure à Mach 1.

9. Procédé selon l'une quelconque des revendications 1 à 8, **caractérisé en ce qu'**il comprend l'injection du ou des flux (c) d'un gaz inerte(s) ou d'un mélange de gaz inertes et l'injection du ou des flux (d) d'oxygène ou de gaz enrichi en oxygène.

10. Procédé selon l'une quelconque des revendications 1 à 9, **caractérisé en ce que** le combustible comprend un combustible solide pulvérisé par un gaz vecteur, éventuellement enrichi en oxygène.

11. Procédé selon l'une quelconque des revendications 1 à 10, **caractérisé en ce que** le four industriel à haute température est un four rotatif.

12. Procédé selon l'une quelconque des revendications 1 à 10 **caractérisé en ce qu'**il est mis en oeuvre à l'aide d'un dispositif comprenant :
- un brûleur (1) susceptible d'être alimenté en comburant et combustible,
- un moyen d'injection d'air assurant la délivrance d'un flux d'air (b) autour du brûleur (1),
- au moins une lance (2) d'injection de gaz inerte, ayant une première extrémité (2a) d'arrivée de gaz et une seconde extrémité (2b) de sortie de gaz, la seconde extrémité (2b) de sortie de gaz étant plus proche de l'axe longitudinal du brûleur (1) que la première extrémité (2a) d'arrivée de gaz, et /ou
- au moins une lance (3) d'injection d'oxygène ou de gaz enrichi en oxygène, ayant une première extrémité (3a) d'arrivée de gaz et une seconde extrémité (3b) de sortie de gaz, la première extrémité (3a) d'arrivée de gaz étant plus proche de l'axe longitudinal du brûleur (1) que la seconde extrémité (3b) de sortie de gaz.

13. Procédé selon la revendication 12, **caractérisé en ce que** la lance (2) d'injection de gaz inerte est inclinée d'un angle α compris entre 0° et 45°, qui est formé par les axes longitudinaux de la lance (2) et du brûleur (1), et **en ce que** la lance (3) d'injection d'oxygène ou de gaz enrichi en oxygène est inclinée d'un angle β compris entre 0° et 20°, qui est formé par les axes longitudinaux de la lance (3) et du brûleur (1).

14. Procédé selon l'une quelconque des revendications 12 ou 13, **caractérisé en ce qu'**il comprend :
au moins deux lances (2) d'injection de gaz inerte, agencées concentriquement autour du brûleur (1), et /ou
au moins deux lances (3) d'injection d'oxygène ou de gaz enrichi en oxygène, agencées concentriquement autour du brûleur (1) principal,

15. Procédé selon l'une quelconque des revendications 12 à 14, **caractérisé en ce que** le brûleur (1) comprend au niveau de sa sortie un appendice (4) en forme de douille ayant les bords intérieurs (4a) et extérieurs (4b) évasés, les bords intérieurs (4a) étant évasés d'un angle γ par rapport à l'axe longitudinal du brûleur (1) et les bords extérieurs (4b) étant évasés d'un angle δ par rapport à l'axe longitudinal du brûleur (1) l'appendice (4) servant à la fois d'ouvreau pour la combustion s'initiant au niveau de la sortie du brûleur (1) et de déflecteur pour l'air secondaire.

16. Utilisation du procédé selon l'une des revendications 1 à 15 pour la calcination d'un matériau à base de minerais.

## Claims

1. A method of calcining a material, in which said material is heated in contact with a heat source essentially created by a flame generated by at least a flow (a) of fuel and primary air and a flow (b) of secondary air, the flame comprising a first combustion zone (I) with a temperature below 1500°C and a second combustion zone (II) with a temperature above 1500°C, and in which
- at least one flow (c) of at least one inert gas is injected into the flame at the point where the second combustion zone (II) starts; and/or
- at least one flow (d) of oxygen or an oxygen-enriched gas is injected into the second combustion zone (II).

2. Method according to Claim 1, **characterized in that** the flow (or flows) (d) is (or are) injected so that it (they) is (are) tangential with the flame (F) in its second combustion zone (II).

3. Method according to Claim 1, **characterized in that** the inert gas is chosen from the group consisting of nitrogen, recirculation flue gases, carbon dioxide and steam.

4. Method according to either of Claims 1 and 2, **characterized in that** the inert gas is nitrogen.

5. Method according to any one of Claims 1 to 3, **characterized in that** the flow (or flows) (c) is (or are) injected with a greater velocity than that of the secondary air.

6. Method according to any one of Claims 1 to 4, **characterized in that** the flow (or flows) (c) is (or are) injected with a lower velocity than the speed of sound as measured in the kiln.

7. Method according to any one of Claims 1 to 5, **characterized in that** the flow (or flows) (c) is (or are) injected as one or more swirling injections possessing a tangential component.

8. Method according to any one of Claims 1 to 7, **characterized in that** the flow (or flows) (d) is (or are) injected with a velocity greater than Mach 0.5, preferably greater than Mach 1.

9. Method according to any one of Claims 1 to 8, **characterized in that** it comprises the injection of the flow or flows (c) of one or more inert gases or of a mixture of inert gases and the injection of the flow or flows (d) of oxygen or of oxygen-enriched gas.

10. Method according to any one of Claims 1 to 9, **characterized in that** the fuel comprises a solid fuel sprayed by an optionally oxygen-enriched carrier gas.

11. Method according to any one of Claims 1 to 10, **characterized in that** the high-temperature industrial kiln is a rotary kiln.

12. Method according to any one of Claims 1 to 10, **characterized in that** it is implemented using a device comprising:
- a burner (1) that can be fed with oxidizer and fuel;
- an air injection means (2) for delivering a flow (b) of air around the burner (1);
- at least one inert gas injection lance (2) having a first, gas inlet end (2a) and a second, gas outlet end (2b), the second, gas outlet end (2b) being closer to the longitudinal axis of the burner (1) than the first, gas inlet end (2a); and/or
- at least one oxygen or oxygen-enriched-gas injection lance (3) having a first, gas inlet end (3a) and a second, gas outlet end (3b), the first, gas inlet end (3a) being closer to the longitudinal axis of the burner (1) than the second, gas outlet end (3b).

13. Method according to Claim 12, **characterized in that** the inert-gas injection lance (2) is inclined at an angle α of between 0° and 45°, which angle is formed by the longitudinal axis of the lance (2) and the longitudinal axis of the burner (1), and **in that** the oxygen or oxygen-enriched-gas injection lance (3) is inclined at an angle β of between 0° and 20°, which angle is formed by the longitudinal axis of the lance (3) and the longitudinal axis of the burner (1).

14. Method according to either of Claims 12 and 13, **characterized in that** it comprises:
- at least two inert-gas injection lances (2) arranged concentrically around the burner (1); and/or
- at least two oxygen or oxygen-enriched-gas injection lances (3) arranged concentrically around the main burner (1).

15. Method according to any one of Claims 12 to 14, **characterized in that** the burner (1) includes, at its outlet, a socket-shaped appendage (4) having flared inner (4a) and outer (4b) edges, the inner edges (4a) being flared at an angle γ to the longitudinal axis of the burner (1) and the outer edges (4b) being flared at an angle δ to the longitudinal axis of the burner (1), the appendage (4) serving both as quarl for the combustion, initiated at the outlet of the burner (1), and as deflector for the secondary air.

16. Use of the method according to one of Claims 1 to 15 for calcining an ore-based material.

## Patentansprüche

1. Verfahren zum Kalzinieren eines Werkstoffs, bei dem der Werkstoff durch Kontakt mit einer Wärmequelle erwärmt wird, die im Wesentlichen von einer Flamme, die von mindestens einem Strom (a) von Brennstoff und Primärluft erzeugt wird, und einem Strom (b) von Sekundärluft gebildet wird, wobei die Flamme eine erste Verbrennungszone (I) mit einer Temperatur von weniger als 1500°C und eine zweite Verbrennungszone (II) mit einer Temperatur von mehr als 1500°C enthält, und bei dem
- mindestens ein Strom (c) mindestens eines Inertgases in Höhe des Beginns der zweiten Verbrennungszone (II) ins Innere der Flamme eingeblasen wird, und/oder
- mindestens ein Strom (d) von Sauerstoff oder von einem mit Sauerstoff angereicherten Gas in Höhe der zweiten Verbrennungszone (II) eingeblasen wird.

2. Verfahren nach Anspruch 1, **dadurch gekennzeichnet, dass** der Strom oder die Ströme (d) so eingeblasen wird (werden), dass er (sie) die Flamme (F) in Höhe ihrer zweiten Verbrennungszone (II) tangiert (tangieren).

3. Verfahren nach Anspruch 1, **dadurch gekennzeichnet, dass** das Inertgas aus der Gruppe ausgewählt wird, die aus Stickstoff, Rezirkulationsrauchgasen, Kohlendioxid und Wasserdampf besteht.

4. Verfahren nach einem der Ansprüche 1 oder 2,
**dadurch gekennzeichnet, dass** das Inertgas Stickstoff ist.

5. Verfahren nach einem der Ansprüche 1 bis 3,
**dadurch gekennzeichnet, dass** der Strom (oder die Ströme) (c) mit einer höheren Geschwindigkeit als diejenige der Sekundärluft eingeblasen wird (werden).

6. Verfahren nach einem der Ansprüche 1 bis 4,
**dadurch gekennzeichnet, dass** der Strom (oder die Ströme) (c) mit einer unter der Schallgeschwindigkeit liegenden Geschwindigkeit eingeblasen wird (oder werden), wie sie im Ofen gemessen wird.

7. Verfahren nach einem der Ansprüche 1 bis 5,
**dadurch gekennzeichnet, dass** das Einblasen des Stroms (oder der Ströme) (c) eine Wirbel-Einblasung(en) ist (sind), die eine tangentiale Komponente besitzt (besitzen).

8. Verfahren nach einem der Ansprüche 1 bis 7,
**dadurch gekennzeichnet, dass** der Strom (oder die Ströme) (d) mit einer Geschwindigkeit eingeblasen wird (oder werden), die höher ist als Mach 0,5, vorzugsweise höher als Mach 1.

9. Verfahren nach einem der Ansprüche 1 bis 8,
**dadurch gekennzeichnet, dass** es das Einblasen des Stroms (oder der Ströme) (c) eines Inertgases oder einer Mischung von Inertgasen und das Einblasen des Stroms oder der Ströme (d) von Sauerstoff oder von mit Sauerstoff angereichertem Gas enthält.

10. Verfahren nach einem der Ansprüche 1 bis 9,
**dadurch gekennzeichnet, dass** der Brennstoff einen von einem ggf. mit Sauerstoff angereicherten Trägergas pulverisierten Festbrennstoff enthält.

11. Verfahren nach einem der Ansprüche 1 bis 10,
**dadurch gekennzeichnet, dass** der Hochtemperatur-Industrieofen ein Drehofen ist.

12. Verfahren nach einem der Ansprüche 1 bis 10,
**dadurch gekennzeichnet, dass** es mit Hilfe einer Vorrichtung durchgeführt wird, die enthält:
- einen Brenner (1), der mit einem Sauerstoffträger und mit Brennstoff gespeist werden kann,
- eine Lufteinblaseinrichtung, die die Lieferung eines Luftstroms (b) um den Brenner (1) herum gewährleistet,
- mindestens eine Inertgas-Einblaslanze (2), die ein erstes Gaseinlassende (2a) und ein zweites Gasauslassende (2b) hat, wobei das zweite Gasauslassende (2b) der Längsachse des Brenners (1) näher liegt als das erste Gaseinlassende (2a), und/oder
- mindestens eine Einblaslanze (3) für Sauerstoff oder mit Sauerstoff angereichertes Gas, die ein erstes Gaseinlassende (3a) und ein zweites Gasauslassende (3b) hat, wobei das erste Gaseinlassende (3a) der Längsachse des Brenners (1) näher liegt als das zweite Gasauslassende (3b).

13. Verfahren nach Anspruch 12, **dadurch gekennzeichnet, dass** die Inertgas-Einblaslanze (2) um einen Winkel α zwischen 0° und 45° geneigt ist, der von den Längsachsen der Lanze (2) und des Brenners (1) gebildet wird, und dass die Einblaslanze (3) für Sauerstoff oder für mit Sauerstoff angereichertes Gas um einen Winkel β zwischen 0° et 20° geneigt ist, der von den Längsachsen der Lanze (3) und des Brenners (1) gebildet wird.

14. Verfahren nach einem der Ansprüche 12 oder 13,
**dadurch gekennzeichnet, dass** es enthält:
mindestens zwei Inertgas-Einblaslanzen (2), die konzentrisch um den Brenner (1) herum angeordnet sind, und/oder
mindestens zwei Einblaslanzen (3) für Sauerstoff oder für mit Sauerstoff angereichertes Gas, die konzentrisch um den Hauptbrenner (1) herum angeordnet sind.

15. Verfahren nach einem der Ansprüche 12 bis 14,
**dadurch gekennzeichnet, dass** der Brenner (1) in Höhe seines Ausgangs ein Ansatzstück (4) in Form einer Hülse enthält, deren Innenränder (4a) und Außenränder (4b) aufgeweitet sind, wobei die Innenränder (4a) um einen Winkel γ bezüglich der Längsachse des Brenners (1) und die Außenränder (4b) um einen Winkel δ bezüglich der Längsachse des Brenners (1) aufweitet sind, wobei das Ansatzstück (4) sowohl als Brennertunnel für die Verbrennung, die in Höhe des Ausgangs des Brenners (1) gestartet wird, als auch als Ablenkblech für die Sekundärluft dient.

16. Verwendung des Verfahrens nach einem der Ansprüche 1 bis 15 zum Kalzinieren eines Werkstoffs auf der Basis von Erzen.
